# EUROPÄISCHE PATENTSCHRIFT

(11) **EP 3 142 196 B1**
(45) Veröffentlichungstag und Bekanntmachung des Hinweises auf die Patenterteilung: **12.12.2018**
(21) Anmeldenummer: 16187462.3
(22) Anmeldetag: 06.09.2016
(51) Int. Cl.: H01R 43/26, H01R 25/14, H01R 31/06, H01R 9/26, H02B 1/056, H01R 13/506

(54) **ANSCHLUSSADAPTER FÜR EIN STROMSCHIENENEINSPEISESYSTEM UND SEIN ANORDNUNGSVERFAHREN**
CONNECTION ADAPTER FOR A BUS BAR FEED-IN SYSTEM AND ITS ARRANGING METHOD
ADAPTATEUR DE RACCORDEMENT D'UN SYSTEME D'ALIMENTATION DE BARRETTES DE CONNEXION ET SA MÉTHODE D'ARRANGEMENT

(30) Priorität: 09.09.2015 DE 102015115197
(43) Veröffentlichungstag der Anmeldung: 15.03.2017
(73) Patentinhaber: Eaton Intelligent Power Limited, Dublin 4 (IE)
(72) Erfinder: KNOERRCHEN, Oliver, 50829 Köln (DE); STANKE, Stephan, 53359 Rheinbach (DE); GROSSE-ONNEBRINK, Ulrike, 53757 Sankt Augustin (DE)
(74) Vertreter: Eaton IP Group EMEA

(56) Entgegenhaltungen:
- EP-A1- 0 407 241
- EP-A1- 1 289 085
- EP-A1- 1 505 701
- EP-A1- 2 296 237
- DE-A1-102011 001 274
- DE-U1-202004 016 746

## Beschreibung

Die vorliegende Erfindung betrifft einen Anschlussadapter gemäß Anspruch 1, der zum elektrischen Verbinden einer elektrischen Komponente mit einem außen geführten Einspeise- und/oder Signalbus vorgesehen, und in eine Steckrichtung auf den Einspeise- und/oder Signalbus aufsteckbar ist, eine Anordnung aus einer elektrischen Komponente und einem solchen Anschlussadapter sowie ein Verfahren zum Anordnen der elektrischen Komponente am Anschlussadapter.

In Rechenzentren, Energieverteilungsanlagen, Fertigungs-, Verpackungs- oder Förderanlagen wird eine Vielzahl elektrischer Geräte und Anlagen miteinander verschaltet, um sie anzutreiben, ein- und auszuschalten, zu steuern, zu schützen und zu überwachen. Dafür werden modulare elektrische Komponenten wie beispielsweise Befehls-, Schutz- und Meldegeräte, Sensoren und Positionsschalter, Schütze, Motorstarter und Frequenzumrichter, Netzfilter und Controller, Überspannungsschutzvorrichtungen, Motorschutzschalter oder Leuchtmelder zur Verfügung gestellt. Oftmals sind diese als Reihenbausteine zur Montage auf Sammelschienen erhältlich, um die Montage für den Bediener zu vereinfachen und eine gute Übersichtlichkeit über die Verschaltung zu schaffen.

Für die Verschaltung werden häufig Bussysteme verwendet, die die elektrische Versorgung und Signalverteilung an die räumlich verteilten elektrischen Geräte und Anlagen sicherstellen. Um einen schnellen Zugriff auf solche Einspeise- und/oder Signalbusse zu gewährleisten, werden die elektrischen Verbindungen außerhalb der Geräte und Anlagen geführt. Es werden dabei beispielsweise Stromschienen verwendet, die an Montageleisten angeordnet und von außen zugänglich sind. Dadurch ist der Abgriff der elektrischen Versorgung und der elektrischen Signale einfach und an beliebigen Stellen der Busse möglich. Für den Abgriff werden Anschlussadapter verwendet, die zum Auf- oder Einbau der modularen elektrischen Komponenten vorgesehen sind. Ein solches als Adapter ausgeführtes Steckmodul offenbart die Druckschrift EP 1 289 085 A1. Das Steckmodul ist auf einen Stecksockel, an dem die Stromschienen angeordnet sind, mit einer Schwenkbewegung aufsteckbar. Zum Kontaktieren der Stromschienen des Stecksockels weist das Steckmodul Tulpenkontakte auf. Modulare elektrische Komponenten sind auf dem Steckmodul anordbar. Die modularen elektrischen Komponenten werden am Anschlussadapter herkömmlich von Hand verschaltet.

Die Patentschrift DE 698 08 836 T2 zeigt ein Schienensystem, an dem elektrische Vorrichtungen mittels eines Adapters gehalten werden. Der Adapter weist eine Gleitbahn auf, in der ein Schieber hin- und her schiebbar ist. Die Vorrichtung ist an den Adapter anschließbar, indem der Schieber zunächst in eine Richtung verschoben wird, so dass er in Verrastungen des Schiebers einhängbar ist, und dann in die Gegenrichtung zurückgeschoben wird, wobei er ein Kontaktende eines ihn mit dem Schienensystem verbindenden Leiters elektrisch kontaktiert.

Die Patentschrift DE 103 06 548 B4 offenbart eine Schutzschaltereinrichtung, bei der ein Schaltoberteil auf ein Schaltunterteil schiebbar ist, wobei elektrische Kontakte des Schaltoberteils in elektrische Kontakte des Schaltunterteils eingeschoben werden, die zum elektrischen Kontaktieren der Sammelschiene vorgesehen sind. Ein Anschlussmodul, das Abgangsleitungen zugeordnete elektrische Kontakte aufweist, ist schwenkbar am Schaltunterteil oder Schaltoberteil gelagert und auf das Schaltoberteil oder Schaltunterteil aufschwenkbar.

Die Druckschrift EP 1 351 336 B1 offenbart ein Steckmodul, bei dem für jeden auf eine Stromschiene aufsteckbaren Tulpenkontakt ein Schraubanschluss vorgesehen ist, an den ein elektrischer Leiter anschließbar ist, mit dem die jeweils elektrisch kontaktierte Stromschiene mit der modularen elektrischen Komponente verbindbar ist.

EP 2 296 237 A1 offenbart einen Anschlussadapter gemäß dem Oberbegriff des Anspruchs 1.
Um das Aufschwenken des Steckmoduls auf den Stecksockel zu ermöglichen, muss oberhalb des Stecksockels Einbauraum zur Verfügung stehen. Zudem ist ein Verschalten von Hand aufwändig.

### Offenbarung der Erfindung

Aufgabe der vorliegenden Erfindung ist es, einen Anschlussadapter für einen außen geführten Einspeise- und/oder Signalbus zu schaffen, der und an den modulare elektrische Komponenten verschiedener Funktion schnell und einfach anschließbar sind, wobei der dabei benötigte Einbauraum möglichst klein ist.

Die Aufgabe wird gelöst mit einem Anschlussadapter gemäß dem unabhängigen Anspruch 1, eine Anordnung aus einer elektrischen Komponente und einem Anschlussadapter, insbesondere einem solchen Anschlussadapter, gemäß dem abhängigen Anspruch 11 sowie ein Verfahren zum Anordnen einer elektrischen Komponente an einen solchen Anschlussadapter gemäß dem unabhängigen Anspruch 12. Vorteilhafte Ausführungsformen sind den abhängigen Ansprüchen entnehmbar.

Dafür wird ein Anschlussadapter geschaffen, der zum elektrischen Verbinden einer elektrischen Komponente mit einem außen geführten Einspeise- und/oder Signalbus vorgesehen ist. Der Anschlussadapter ist in eine Steckrichtung auf den Einspeise- und/oder Signalbus aufsteckbar. Dafür weist er Steckkontakte, vorzugsweise Tulpenkontakte auf, die auf Stromschienen des Einspeise- und/oder Signalbusses aufsteckbar sind.

Der Einspeise- und/oder Signalbus erstreckt sich bevorzugt entlang einer Ebene, die durch eine Erstreckungsrichtung und eine Schieberichtung aufgespannt ist. Dabei ist die Schieberichtung bevorzugt quer zur Erstreckungsrichtung angeordnet. Die Steckrichtung erstreckt sich bevorzugt quer zum Einspeise- und/oder Signalbus.

Der Anschlussadapter weist zudem elektrische Anschlusssteckmittel zum elektrischen Kontaktieren der elektrischen Komponente auf. Die elektrischen Anschlusssteckmittel sind bevorzugt als Stecker oder als Buchse ausgebildet.

In der Ausführungsform als Buchse sind sie bevorzugt als Federkraftklemmen, insbesondere als Push- In- Klemmen, ausgebildet.

Zum Befestigen der elektrischen Komponente am Anschlussadapter weist dieser weiterhin zumindest ein Fixiermittel auf. Das Fixiermittel ist von einer Fixierposition ausgehend in eine Verstellposition und zurück verstellbar.

Bevorzugt ist es als Schwenkarm ausgebildet, der um eine Schwenkachse in und gegen eine Schwenkrichtung schwenkbar ist. In dieser Ausführungsform ist es verschwenkbar.

Der Anschlussadapter weist Anschlusssteckmittel auf, die gegen eine Schieberichtung ausgerichtet sind, so dass die elektrischen Komponente in Schieberichtung auf die Anschlusssteckmittel aufschiebbar ist. Das Fixiermittel ist zum Fixieren der elektrischen Komponente gegen ein Verschieben gegen die Schieberichtung ausgebildet.

Vorzugsweise ist das Fixiermittel beim Aufschieben der elektrischen Komponente in die Verstellposition verstellt. Dadurch behindert das Fixiermittel die elektrische Komponente beim Aufschieben auf die Anschlusssteckmittel nicht. Für den Monteur ist die elektrische Komponente dadurch lediglich durch Aufschieben in Schieberichtung, und daher sehr einfach, am Anschlussadapter montierbar.

Besonders bevorzugt wird das Fixiermittel gegen eine Rückstellkraft verstellt. Dadurch wird es selbsttätig zurück gestellt. Weiterhin bevorzugt ist es dafür aus einem elastischen Material, insbesondere aus einem elastischen Kunststoff, hergestellt. Es ist aber ebenfalls eine Ausführungsform mit einem Feder- belasteten Fixiermittel möglich.

Erfindungsgemäß ist das Fixiermittel als ein Rasthaken ausgebildet. Bevorzugt wird der Rasthaken beim Anlaufen durch die elektrische Komponente ausgelenkt. Weiterhin bevorzugt wird er, insbesondere in einer Endposition der elektrischen Kompontente, selbsttätig zurückgelenkt. Der durch diesen Schwenkarm gebildete Rastmechanismus ermöglicht so ein automatisches Verrasten der elektrischen Komponente beim Aufschieben dieser in die Schieberichtung ohne weitere Handgriffe des Bedieners.

Um den Anschlussadapter am Einspeise- und/oder Signalbus zu fixieren, weist er bevorzugt zwei gegensätzlich zueinander schwenkbare Rastarme au. Die Rastarme sind vorzugsweise um eine Höhe des Einspeise- und/oder Signalbusses voneinander beabstandet. Besonders bevorzugt sind sie mittels einer Umlenkstange miteinander verbunden. Dadurch sind sie gleichzeitig gegensätzlich betätigbar. Das Lösen des Anschlussadapters von dem Einspeise- und/oder Signalbus ist für den Monteur dann besonders einfach. Ganz besonders bevorzugt ist die Umlenkstange manuell durch Drücken eines Entrieglers und einhändig möglich. Der Entriegler ist bevorzugt oberhalb der Deckelwand angeordnet. Besonders bevorzugt ist es um eine Schwenkachse schwenkbar. In Abhängigkeit von den Bauraumverhältnissen ist aber ebenfalls eine seitliche Anordnung des Entrieglers bevorzugt, so dass dieser von vorn oder von einer Seite aus betätigbar ist.

Zum Anordnen der elektrischen Komponente weist der Anschlussadapter bevorzugt eine Geräteaufnahme auf. Die Geräteaufnahme ist vorzugsweise durch eine Stirnwand und eine Deckelwand begrenzt. Die elektrischen Anschlusssteckmittel sind dabei bevorzugt an der Deckelwand angeordnet. Vorzugsweise sind sie von der Stirnwand beabstandet. Bei dieser Ausbildung des Anschlussadapters wird die elektrische Komponente, insbesondere parallel zur Stirnwand, an dieser angeordnet. '

Die Anschlusssteckmittel weisen bevorzugt eine Längserstreckung gegen die Schieberichtung auf. Dadurch erstrecken sie sich bei am Anschlussadapter angeordneter elektrischer Komponente in diese hinein. Sie fixieren die elektrische Komponente dann gegen ein Lösen von der Stirnwand weg, insbesondere gegen die Steckrichtung.

Um die elektrische Komponente zusätzlich gegen ein solches Lösen von der Stirnwand weg zu sichern, ist es weiterhin bevorzugt, dass der Anschlussadapter zumindest ein Haltemittel aufweist, das zum Fixieren der elektrischen Komponente an der Stirnwand vorgesehen ist. Vorzugsweise ist die elektrische Komponente mit einem Gegenhaltemittel in das Haltemittel in Schieberichtung einschiebbar. Das Haltemittel fixiert die elektrische Komponente gegen ein Lösen gegen eine Normalenrichtung zur Stirnwand, insbesondere gegen die Steckrichtung.

Um die Verrastung des Anschlussadapters am Einspeise- und/oder Signalbus anzuzeigen, weist der Anschlussadapter weiterhin ein Anzeigemittel auf. Das Anzeigemittel wirkt bevorzugt mit dem Entriegler zusammen. Ganz besonders bevorzugt zeigt es die Position des Entrieglers an.

Es ist weiterhin bevorzugt, dass der Anschlussadapter Befestigungsmittel zum Befestigen eines Erweiterungselementes aufweist, das in Schieberichtung vor dem Anschlussadapter an diesem anordbar ist. Mit dem Erweiterungselement sind elektrische Erweiterungskomponenten an die am Anschlussadapter angeordnete elektrische Komponente anordbar.

Die Aufgabe wird weiterhin gelöst mit einem Erweiterungselement. Das Erweiterungselement weist bevorzugt zu den Befestigungsmitteln korrespondierend ausgebildete Gegenmittel auf. Vorzugsweise sind zumindest zwei Erweiterungselemente in einer Erstreckungsrichtung nebeneinander, insbesondere quer zur Schieberichtung, anordbar.

Die Aufgabe wird weiterhin gelöst mit einer Anordnung aus einer elektrischen Komponente und einem solchen Anschlussadapter. Der Anschlussadapter ist zum elektrischen Verbinden der elektrischen Komponente mit einem außen geführten Einspeise- und/oder Signalbus vorgesehen, und in eine Steckrichtung auf den Einspeise- und/oder Signalbus aufsteckbar.

Die Anordnung zeichnet sich dadurch aus, dass die elektrische Komponente in eine Schieberichtung entlang dem Anschlussadapter verschiebbar ist, wobei sie in einer Endposition mit einem Fixiermittel des Anschlussadapters mechanisch gegen ein Verschieben gegen die Schieberichtung fixiert, und mit elektrischen Anschlusssteckmitteln des Anschlussadapters elektrisch kontaktiert ist. Vorzugsweise wird die elektrische Komponente gleichzeitig oder nahezu gleichzeitig mechanisch fixiert und elektrisch kontaktiert. Diese Anordnung ist für den Monteur lediglich durch Verschieben der elektrischen Komponente in Schieberichtung montierbar.

Besonders bevorzugt wird die elektrische Komponente dabei entlang der Stirnwand verschoben. Die Stirnwand ist dem Monteur bevorzugt zugewandt.

Die Aufgabe wird weiterhin gelöst mit einem Verfahren zum Anordnen einer elektrischen Komponente an einem solchen Anschlussadapter. Das Verfahren sieht vor, dass die elektrische Komponente in eine Schieberichtung verschoben wird, wobei sie auf elektrische Anschlusssteckmittel des Anschlussadapters geschoben wird, bis eine Endposition erreicht ist. In der Endposition kontaktiert sie die elektrischen Anschlusssteckmittel elektrisch. Zudem schwenkt das Fixiermittel in der Endposition von einer Verstellposition in die Fixierposition. Vorzugsweise untergreift das Fixiermittel die elektrische Komponente in der Endposition, insbesondere mit einer an ihr angeordneten Rastkante. Dadurch sichert es die elektrische Komponente gegen eine Verschieben gegen die Verschieberichtung.

Die elektrische Komponente wird dafür bevorzugt zunächst an den Anschlussadapter, insbesondere unterhalb der Anschlusssteckmittel, angelegt. Unterhalb der Anschlusssteckmittel heißt dabei in Schieberichtung vor den Anschlusssteckmitteln. Der dafür in Schieberichtung erforderliche Bauraum beschränkt sich etwa auf eine Länge der Anschlusssteckmittel und eine Länge der elektrischen Komponente. Dadurch ist der für die Montage benötigte Bauraum gering. Durch Anpassen einer Länge des Anschlussadapters in Schieberichtung an die Länge der Anschlusssteckmittel und der elektrischen Komponente ist der benötigte Bauraum für die Montage der Anordnung sehr genau abschätzbar.

Es ist bevorzugt, dass das Fixiermittel zuvor beim Anlegen der elektrischen Komponente an den Anschlussadapter, insbesondere an die Stirnwand des Anschlussadapters, und/oder während des Verschiebens der elektrischen Komponente in Schieberichtung entlang dem Anschlussadapter, von der Fixierposition in die Verstellposition verschwenkt oder ausgelenkt wird. Vorzugsweise wird das Fixiermittel gegen eine Rückstellkraft von der Fixierposition in die Verstellposition verschwenkt oder zurück gelenkt. Dadurch wird es bei Erreichen der Endposition automatisch zurückgeschwenkt. In dieser Ausführungsform benötigt die Handhabung des Fixiermittels keine zusätzlichen Arbeitsschritte und das Fixiermittel behindert das Aufschieben der elektrischen Komponente an den Anschlussadapter nicht.

Im Folgenden wird die Erfindung anhand von Figuren beschrieben. Die Figuren sind lediglich beispielhaft und schränken den allgemeinen Erfindungsgedanken nicht ein.
- Fig. 1: zeigt einen Anschlussadapter sowie verschiedene weitere Adapter und Elemente, die an einem außen geführten Einspeise- und/oder Signalbus anordbar sind;
- Fig. 2: zeigt in (a) eine weitere Ausführungsform des Anschlussadapters, in (b) den Anschlussadapter aus (a) in einer explosionsartigen Ansicht, und in (c) den am Einspeise- und/oder Signalbus angeordneten Anschlussadapter in einem Schnittbild;
- Fig. 3: zeigt in (a) ein Erweiterungselement für einen solchen Anschlussadapter, in (b) zwei in einer Erstreckungsrichtung nebeneinander angeordnete Erweiterungselemente, in (c) die Erweiterungselemente aus (c) in einer Seitenansicht, und in (c) ein Schnittbild A - A durch die Erweiterungselemente der Fig. 3 (c);
- Fig. 4: zeigt eine rückwärtige Ansicht einer elektrischen Komponente; und
- Fig. 5: zeigt in (a) und (b) jeweils eine Anordnung aus dem am Einspeise- und/oder Signalbus angeordneten Anschlussadapter und der elektrischen Komponente aus Fig. 4 sowie weiteren Elementen und Komponenten in einer explosionsartigen Ansicht.

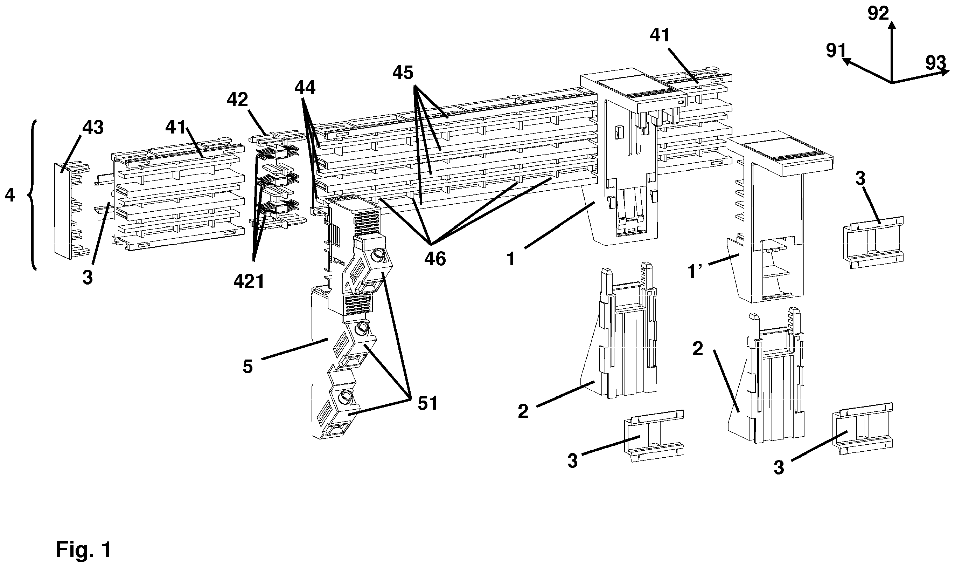

Ein Einspeise- und/oder Signalbus 4 weist zumindest zwei Einspeiseleitungen 44 auf. In der in Fig. 1 dargestellten Ausführungsform weist er drei Einspeiseleitungen 44 und keine Signalleitungen (nicht dargestellt) auf. Es handelt sich hier daher um einen reinen Einspeisebus 4. Die Erfindung ist aber nicht auf einen solchen reinen Einspeisebus 4 beschränkt, sondern bezieht sich auch auf Einspeisebusse 4 mit mehr als drei Einspeiseleitungen 44, insbesondere mit fünf Einspeiseleitungen 44 für Wechselstrom (L1, L2, L3, N, PE), sowie auf Einspeise- und/oder Signalbusse 4 mit einer oder mehreren zusätzlichen Signalleitungen.

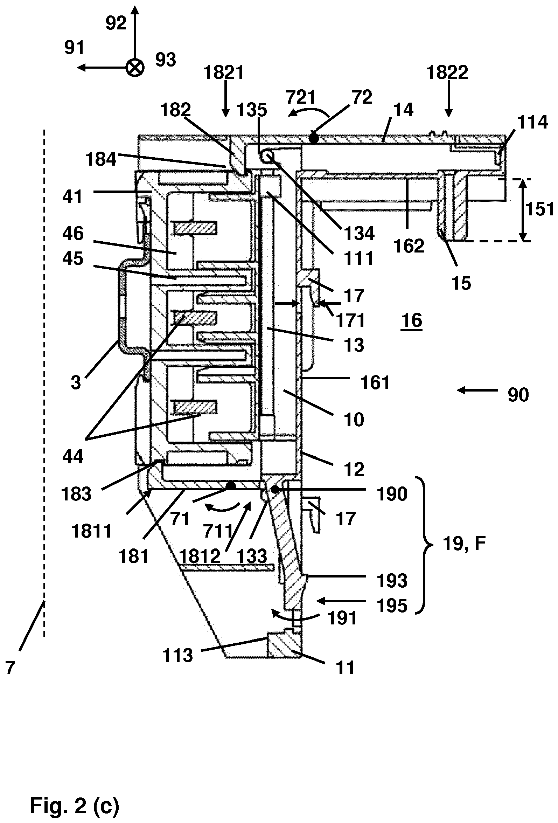

Der Einspeise- und/oder Signalbus 4 umfasst eine oder mehrere Montageleisten 41, die sich entlang einer Ebene (nicht dargestellt) erstrecken. Die Montageleisten 41 sind beispielsweise an eine Wand 7 (s. Fig. 2 (c)) montierbar. Sie sind zudem an Sammelschienen 3, beispielsweise an hutförmigen Sammelschienen 3, befestigbar. Die Ebene ist durch eine Erstreckungsrichtung 93 und eine Schieberichtung 92 aufgespannt.

An den Montageleisten 41 sind als Einspeiseleitungen 44 Stromschienen angeordnet, die sich geradlinig in die Erstreckungsrichtung 93 erstrecken. Im Folgenden werden die Begriffe Einspeiseleitung 44 und Stromschiene synonym verwendet. Die Stromschienen 44 sind an Querstreben 46 befestigt, die sich in die Schieberichtung 92 erstrecken. Sie sind voneinander beabstandet. Zudem sind zwischen den Stromschienen 44 Längsstreben 45 angeordnet. Die Stromschienen 44 sind zum Führen eines Versorgungsstromes vorgesehen.

Die Montageleisten 41 können in Erstreckungsrichtung 93 verschiedene Längen (nicht dargestellt) aufweisen. Sie sind durch Verbindungsleisten 42 miteinander verbindbar. Dafür weisen die Verbindungsleisten 42 elektrische Verbindungselemente 421 auf, mit denen die Stromschienen 44 verschiedener Montageleisten 41 elektrisch verbindbar sind. An den Enden (nicht bezeichnet) des Einspeise- und/oder Signalbusses 4 sind Abschlusselemente 43 in oder gegen die Erstreckungsrichtung 93 auf den Einspeise- und/oder Signalbus 4 aufschiebbar.

Auf den Einspeise- und/oder Signalbus 4 sind elektrische Baugruppen 1, 1', 5, in eine Steckrichtung 91 aufsteckbar. Beispielhaft ist hier ein Einspeiseelement 5 dargestellt. Das Einspeiseelement 5 weist Schraubklemmen 51 auf, die die Stromschienen 44 des Einspeise- und/oder Signalbusses 4 im aufgesteckten Zustand elektrisch kontaktieren. An die Schraubklemmen 51 sind Speiseleitungen (nicht dargestellt) eines Versorgungsspannungsnetzes (nicht dargestellt) anschließbar.

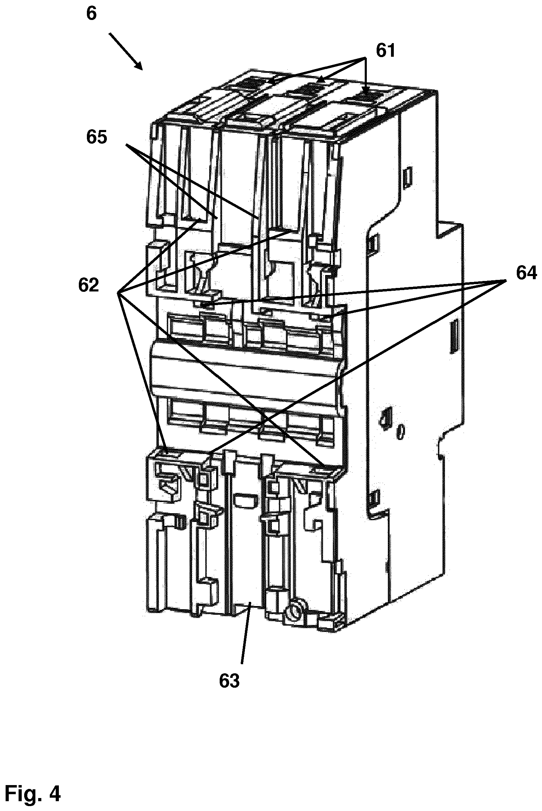

Zudem sind verschiedene Ausführungsformen von Anschlussadaptern 1, 1' dargestellt, an denen elektrische Komponenten 6 anordbar sind. Die elektrischen Komponenten 6 sind mittels der Anschlussadapter 1, 1' elektrisch an die Stromschienen 44 anschließbar. Auf eine erfindungsgemäße erste Ausführungsform des Anschlussadapters 1 sind die elektrischen Komponenten 6 (s. Fig. 4) in Schieberichtung 92 aufschiebbar. Dargestellt ist zudem eine zweite Ausführungsform eines Anschlussadapters 1', an den herkömmliche elektrische Komponenten (nicht gezeigt) anordbar sind, indem sie auf eine Sammelschiene 3 montiert werden.

Die Anschlussadapter 1, 1' sind jeweils mit einem Erweiterungselement 2 erweiterbar. Die Erweiterungselemente 2 sind in Schieberichtung 92 auf den jeweiligen Anschlussadapter 1, 1' aufschiebbar. Sie sind zur Aufnahme elektrischer Erweiterungskomponenten 81, 82 vorgesehen, die beispielsweise an die am Anschlussadapter 1, 1' angeordnete elektrische Komponente 6 anschließbar sind. Die Erweiterungskomponenten 81, 82 können durch Aufschrauben, Aufschieben und/oder mittels einer Sammelschiene 3 am Erweiterungselement 2 befestigt werden.

Die Beschreibung der folgenden Figuren bezieht sich auf die erfindungsgemäße Ausführungsform des Anschlussadapters 1.

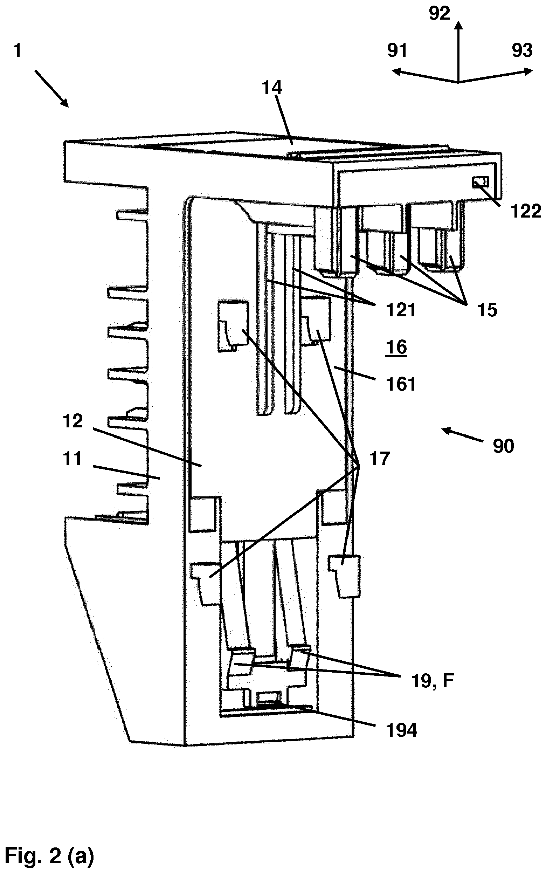

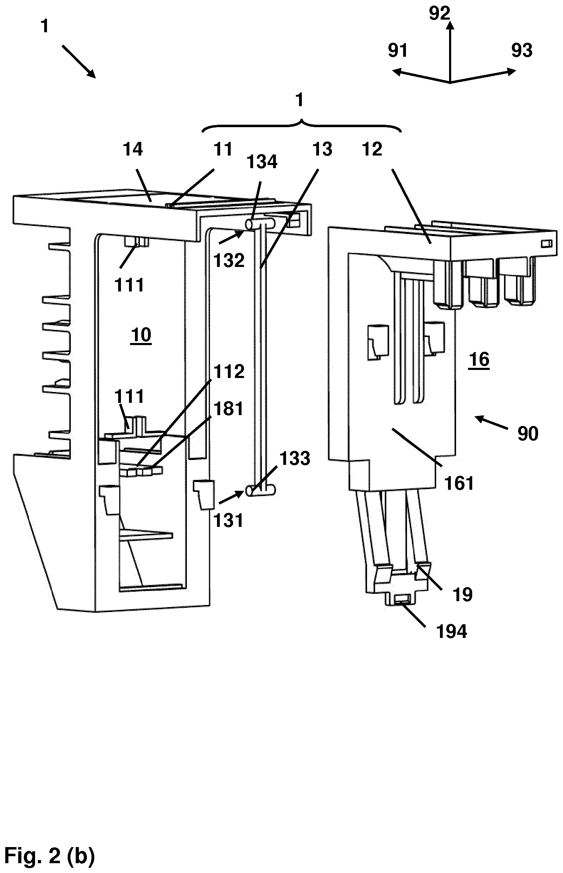

Eine solche erfindungsgemäße Ausführungsform des Anschlussadapters 1 zeigen die Fig. 2 (a) und (b). Fig. 2 (c) zeigt ein Schnittbild durch den am Einspeise- und/oder Signalbus 4 angeschlossenen Anschlussadapter 1 der Fig. 2 (a) und (b). Nur schematisch ist in Fig. 2 (c) eine Wand 7 dargestellt, an der der Einspeise- und/oder Signalbus 4, beispielsweise mit der dargestellten Sammelschiene 3, befestigt werden kann.

Der Anschlussadapter 1 ist in Steckrichtung 91 auf den Einspeise- und/oder Signalbus 4 aufsteckbar. Er ist zum elektrischen Verbinden der Stromschienen 44 mit der am Anschlussadapter 1 angeordneten elektrischen Komponente 6 vorgesehen. Die Nutzung eines Anschlussadapters 1 ermöglicht das Anordnen verschiedener elektrischer Komponenten 6, die sich in ihrer Funktion unterscheiden.

Bei der dargestellten Ausführungsform ist genau eine elektrische Komponente 6 an einer Stirnseite 90 des Anschlussadapters 1, das heißt an einer dem Monteur zugewandten Seite des Anschlussadapters 1, anordbar. Es sind auch Ausführungsformen eines Anschlussadapters 1 bevorzugt, bei denen mehrere elektrische Komponenten 6, insbesondere in Erstreckungsrichtung 93 nebeneinander, am Anschlussadapter 1 anordbar sind.

Zum elektrischen Verbinden der elektrischen Komponente 6 mit den Stromschienen 44 des Einspeise- und/oder Signalbusses 4 weist der Anschlussadapter 1 Anschlusssteckmittel 15 auf, die beim Anordnen der elektrischen Komponente 6 am Anschlussadapter 1 elektrisch mit zu den Anschlusssteckmitteln 15 korrespondierend ausgebildeten Gegenanschlusssteckmitteln 61 (s. Fig. 4) der elektrischen Komponente 6 verbunden werden. Die Anschlusssteckmittel 15 sind im Anschlussadapter 1 elektrisch mit Steckanschlüssen (nicht gezeigt), beispielsweise mit Tulpenkontakten, verbunden. Steckanschlüsse wie beispielsweise Tulpenkontakte sind hinlänglich bekannt und daher hier der Übersichtlichkeit halber nicht dargestellt.

Die Steckanschlüsse sind auf die Stromschienen 44 in Steckrichtung 91 aufsteckbar. Dabei ist jeweils ein Steckanschluss für jede Stromschiene 44 vorgesehen. Beim Anschließen der Gegenanschlusssteckmittel 61 an die Anschlusssteckmittel 15 wird daher jeweils ein Gegenanschlusssteckmittel 61 mit einer Stromschiene 44 elektrisch verbunden.

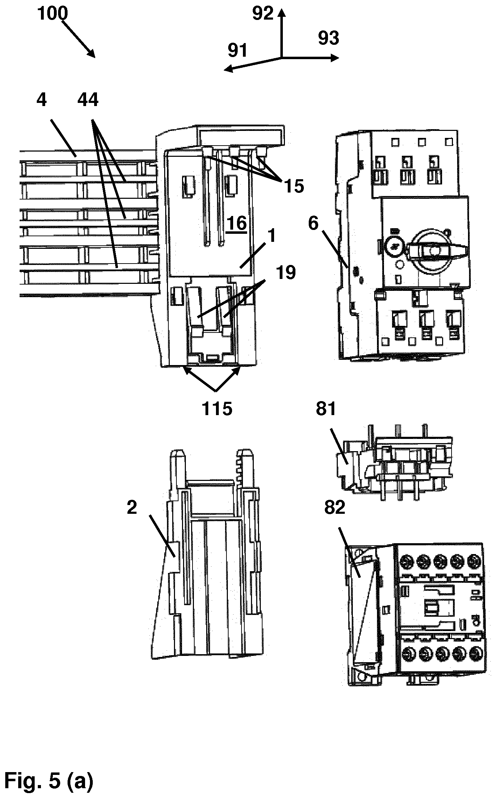

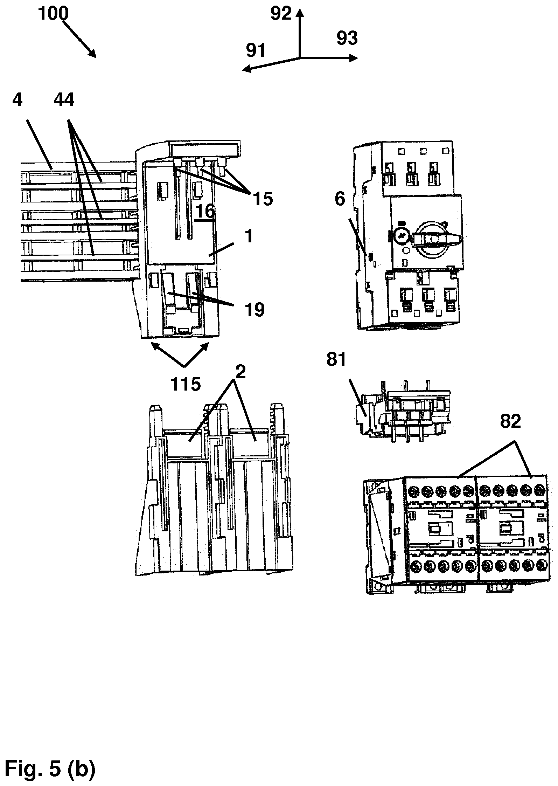

Die Anschlusssteckmittel 15 dieser Ausführungsform sind als Buchsen ausgebildet. Es sind aber auch Anschlussadapter 1 mit als Stecker ausgebildeten Anschlusssteckmitteln 15 bevorzugt (s. Fig. 5 (a) und (b)).

Die Anschlusssteckmittel 15 sind gegen die Schieberichtung 92 ausgerichtet, so dass die elektrischen Komponente 6 in Schieberichtung 92 auf die Anschlusssteckmittel 15 aufschiebbar ist. Der Anschlussadapter 1 ermöglicht daher ein werkzeugloses Anschließen der elektrischen Komponente 6 an den Einspeise- und/oder Signalbus 4.

Dafür weist der Anschlussadapter 1 eine Geräteaufnahme 16 auf, die durch eine Stirnwand 161 und eine Deckelwand 162 begrenzt ist. Die Stirnwand 161 erstreckt sich bei am Einspeise- und/oder Signalbus 4 montiertem Anschlussadapter 1 parallel der Montageleiste 41. Es ist aber auch eine Anordnung der Stirnwand 161 in einem Winkel (nicht gezeigt) größer als 0° zur Montageleiste 41 bevorzugt.

Die Deckelwand 162 ist quer zur Stirnwand 161, und in Schieberichtung 92 oberhalb, das heißt hinter, der Stirnwand 161 angeordnet. Die Anschlusssteckmittel 15 sind an der Deckelwand 162 vorgesehen. Sie sind von der Stirnwand 161 beabstandet. Sie weisen eine Längserstreckung 151 gegen die Schieberichtung 92 auf.

Eine elektrische Komponente 6, deren Gegenanschlusssteckmittel 61 beim Aufschieben der elektrischen Komponente 6 auf den Anschlussadapter 1 fluchtend zu den Anschlusssteckmitteln 15 angeordnet sind, ist daher mit ihren Gegenanschlusssteckmitteln 61 in Schieberichtung 92 auf die Anschlusssteckmittel 15 aufschiebbar. Bei dieser hier gezeigten Ausbildung des Anschlussadapters 1 wird die elektrische Komponente 6 parallel zur Stirnwand 161 an dieser angeordnet.

Um die elektrische Komponente 6 am Anschlussadapter 1 zu befestigen, weist der Anschlussadapter 1 ein Fixiermittel 19 auf. Das Fixiermittel 19 ist von einer Fixierposition F ausgehend in eine Verstellposition (nicht dargestellt) und zurück verstellbar. Es ist hier als ein Schwenkarm ausgebildet, der um eine Schwenkachse 190 in und gegen eine Schwenkrichtung 191 schwenkbar ist. Im Folgenden werden die Begriffe Fixiermittel 19 und Schwenkarm synonym verwendet.

Bei nicht am Anschlussadapter 1 angeordneter elektrischer Komponente 6 befindet sich der Schwenkarm 19 in der Fixierposition F. Er ist dafür ausgebildet, die in einer Endposition (nicht gezeigt) am Anschlussadapter 1 angeordnete elektrische Komponente 6 gegen ein Verschieben gegen die Schieberichtung 92 zu fixieren. Er ist hier als Rasthaken ausgebildet. Die Begriffe Fixiermittel 19, Schwenkarm und Rasthaken werden im Folgenden synonym verwendet.

Dafür weist er eine Elastizität auf, durch die er nach einem Auslenken selbsttätig zurück gelenkt wird. Beim Schieben der elektrischen Komponente 6 in die Schieberichtung 92 auf den Anschlussadapter 1 wird der Rasthaken 19 ausgelenkt. In der Endposition der elektrischen Komponente 6 wird er selbsttätig zurückgelenkt. In dieser Endposition hält er die elektrische Komponente 6 gegen ein Verschieben gegen die Schieberichtung 92.

Dafür weist er eine Rastkante 193 (s. Fig. 2 (c)) auf, die in der Fixierposition F des Schwenkarms 19 an der in der Endposition am Anschlussadapter 1 angeordneten elektrischen Komponente 6 anliegt. Sie greift dann in eine Ausnehmung (nicht gezeigt) der elektrischen Komponente 6 ein und/oder untergreift sie.

Damit der Schwenkarm 19 die elektrische Komponente 6 beim Anordnen an den Anschlussadapter 1 nicht behindert, ist er in Schwenkrichtung 191 um die Schwenkachse 190 in die Verstellposition (nicht dargestellt) verschwenkbar. Er wird beim Anlegen der elektrischen Komponente 6 an den Anschlussadapter 1 und/oder beim Verschieben der elektrischen Komponente 6 in Schieberichtung 92 in die Steckrichtung 91 gedrückt. Dadurch wird er in die Verstellposition verschwenkt.

Aufgrund einer Rückstellkraft des Schwenkarms 19 wird dieser in der Endposition selbsttätig zurück geschwenkt und fixiert die elektrische Komponente 6. Zum Lösen der elektrischen Komponente 6 vom Anschlussadapter 1 ist hier eine Betätigungsöffnung 194 vorgesehen, mit der der Schwenkarm 19, beispielsweise mittels eines Schraubendrehers (nicht gezeigt), betätigbar ist. Er wird Zum Lösen in die Verstellposition verschwenkt. Die elektrische Komponente 6 ist dann vom Anschlussadapter 1 durch Schieben gegen die Schieberichtung 92 lösbar.

Da die Anschlusssteckmittel 15 eine Längserstreckung 151 gegen die Schieberichtung 92 aufweisen, erstrecken sie sich bei am Anschlussadapter 1 angeordneter elektrischer Komponente 6 in diese hinein. Sie fixieren die elektrische Komponente 6 dadurch gegen ein Lösen in eine Normalenrichtung von der Stirnwand 161 weg.

Ein solches Lösen wird zudem verhindert, indem der Anschlussadapter 1 Haltemittel 17 aufweist. Mit den Haltemitteln 17 wird die elektrische Komponente 6 an die Stirnwand 161 gezogen und fixiert. Die elektrische Komponente 6 weist dafür zu den Haltemitteln 17 korrespondierend ausgebildete Gegenhaltemittel 62 (s. Fig. 4) auf. Die Haltemittel 17 sind hier als gegen die Schieberichtung 92 offene Haken ausgebildet. Die elektrische Komponente 6 weist als Gegenhaltemittel 62 Ausnehmungen auf, in die die Haltemittel 17 einschiebbar sind. Die Haltemittel 17 fixieren die elektrische Komponente 6 dann ebenfalls gegen ein Lösen in die Normalenrichtung zur Stirnwand 161, das ist hier gegen die Steckrichtung 61. Ein Abstand 171 (s. Fig. 2 (b)) der Haltemittel 17 zur Stirnwand 161 ist dabei gerade so bemessen, dass die Anschlusssteckmittel 15 und die Gegenanschlusssteckmittel 61 beim Aufschieben der elektrischen Komponente 6 auf den Anschlussadapter 1 zueinander fluchtend angeordnet sind.

Um das Aufschieben der elektrischen Komponente 6 auf den Anschlussadapter 1 weiter zu vereinfachen, sind an der Stirnwand 161 Führungsschienen 121 angeordnet, die sich in Schieberichtung 92 erstrecken und jeweils mit einer Gegenführungskontur 65 (s. Fig. 4) der elektrische Komponente 6 beim Aufschieben zusammenwirken. Die Führungsschienen 121 und die Gegenführungskonturen 65 sind so angeordnet, dass die elektrische Komponente 6 mittig des Anschlussadapters 1 und fluchtend zu den Anschlusssteckmitteln 15 verschoben wird.

Der Anschlussadapter 1 weist zum Fixieren am Einspeise- und/oder Signalbus 4 weiterhin zwei Rastarme 181, 182 (s. Fig. 2 (c)) auf. Die beiden Rastarme 181, 182 sind jeweils um eine Schwenkachse 71, 72 (s. Fig. 2 (c)) in und gegen eine Schwenkrichtung 711, 721 (s. Fig. 2 (c)) schwenkbar. Sie weisen jeweils gegenüber liegenden offene Enden 1811, 1812, 1821, 1822 (s. Fig. 2 (c)) auf. An einem ersten der beiden offenen Enden 1811, 1821 ist jeweils ein Raststeg 183, 184 (s. Fig. 2 (c)) vorgesehen, der zum rastenden Eingreifen in Ausnehmungen (nicht bezeichnet) des Einspeise- und/oder Signalbusses 4 vorgesehen ist.

Die Rastarme 181, 182 sind mittels einer Umlenkstange 13 (s. Fig. 2 (b), (c)) miteinander verbunden. Die Umlenkstange 13 ist in einem Innenraum 10 (s. Fig. 2 (b), (c)) des Anschlussadapters 1, der zwischen zwei Gehäuseteilen 11, 12 (s. Fig. 2 (b), (c)) des Anschlussadapters 1 ausgebildet ist, angeordnet. Sie erstreckt sich parallel der Schieberichtung 92, und ist in einer Führungsnut 111 (s. Fig. 2 (b), (c)) geführt. Die Umlenkstange 13 weist zwei gegenüberliegende offene Enden 131, 132 (s. Fig. 2 (b)) auf, an denen jeweils ein Kopfelement 133, 134 (s. Fig. 2 (b), (c)) angeordnet ist. Die Kopfelemente sind in Kopfaufnahmen 112 (s. Fig. 2 (b)), 135 (s. Fig. 2 (c)) drehbar gelagert.

Das erste Kopfelement 133 ist am zweite offenen Ende 1812 des ersten der beiden Rastarme 181 drehbar angeordnet. Da der Raststeg 183 des ersten Rastarms 181 am ersten offenen Ende 1811 angeordnet ist, ist des dem Kopfelement 133 gegenüber liegend angeordnet. Das zweite Kopfelement 134 ist am ersten offenen Ende 1821 des zweiten Rastarms 182, und daher seinem Raststeg 184 benachbart, drehbar befestigt. Die Rastarme 181, 182 sind dadurch gegensätzlich zueinander schwenkbar.

Zum Betätigen der beiden Rastarme 181, 182 ist hier das zweite offene Ende 1822 des ersten Rastarms 182 als manuell drückbarer Entriegler 14 ausgebildet. Er ist hier in Schieberichtung 92 oberhalb der Deckelwand 162 angeordnet und gegen die Schieberichtung 92 betätigbar.

Durch Drücken des Entrieglers 14 wird der zweite Rastarm 182 um seine Schwenkachse 72 gegen seine Schwenkrichtung 721 verschwenkt. Dadurch wird sein Raststeg 184 aus der Ausnehmung des Einspeise- und/oder Signalbusses 4 gelöst. Die Umlenkstange 13 wird dabei mit dem zweiten Rastarm 182 etwa in Schieberichtung 92 angehoben. Sie zieht den ersten Rastarm 181 dann etwa in Schieberichtung 92. Dadurch wird dieser um seine Schwenkachse 71 gegen seine Schwenkrichtung 711 verschwenkt. Der Raststeg 183des ersten Rastarms 181 wird dann ebenfalls aus der Ausnehmung des Einspeise- und/oder Signalbusses 4 gelöst. Dies ist durch ein Anzeigemittel 114, dass durch ein Sichtfenster 122 (s. Fig. 2 (a)) im zweiten Gehäuseteil 12 des Anschlussadapters 1 sichtbar ist, und das am zweiten offenen Ende 1822 des zweiten Rastarms 182 befestigt ist, für den Monteur sichtbar.

Beim Zurückschwenken der Rastarme 181, 182 in ihre Schwenkrichtung 711, 721 wird auch das Anzeigemittel 114 zurück geschwenkt. Dies ist für den Monteur am Anzeigemittel 114 sichtbar. Das Anzeigemittel 114 ist so bemessen, dass es das sichere Verrasten der Raststege 183, 184 in den Ausnehmungen des Einspeise- und/oder Signalbusses 4 darstellt.

Um ein automatisches Zurückschwenken der Rastarme 181, 182 zu gewährleisten, ist es bevorzugt, dass diese nur gegen eine Rückstellkraft gegen ihre Schwenkrichtung 711, 721 verschwenkbar sind. Dadurch werden die Raststege 183, 184 der Rastarme 181, 182 selbsttätig in die zur Verrastung vorgesehenen Ausnehmungen des Einspeise- und/oder Signalbusses 4 gezogen oder gedrückt.

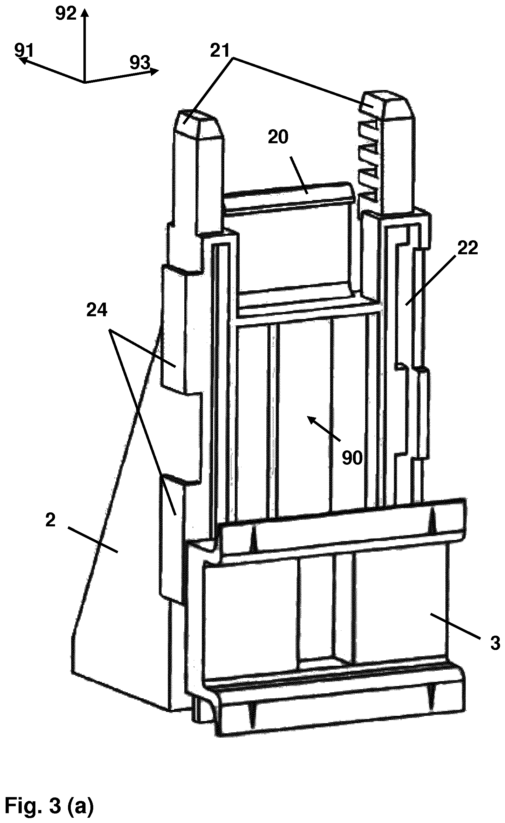

Der Anschlussadapter 1 ist mittels eines Erweiterungselementes 2, welches Fig. 3 (a) zeigt, erweiterbar. Das Erweiterungselement 2 ist in Schieberichtung 92 auf den Anschlussadapter 1 schiebbar. Dafür weist der Anschlussadapter 1 Aufnahmen 115 (s. Fig. 5 (a), (b)) auf, in die Führungsschienen 21 des Erweiterungselementes 2 einschiebbar sind. Zudem ist am Erweiterungselement 2 als ein Gegenbefestigungsmittel ein Verraststeg 20 angeordnet. Das Verraststeg 20 ist zum Verrasten mit einer als Befestigungsmittel dienenden Rastkante 113 (s. Fig. 2 (c)) des Anschlussadapters 1 vorgesehen. Es sichert das Erweiterungselement 2 gegen Verschieben gegen die Verschieberichtung 92, und daher gegen ein Lösen von dem Anschlussadapter 1. Das Erweiterungselement 2 ist daher werkzeuglos, lediglich durch Aufscheiben, am Anschlussadapter 1 anordbar.

Mit dem Erweiterungselement 2 sind elektrische Erweiterungskomponenten 81, 82 der am Anschlussadapter 1 angeordneten elektrischen Komponente 6 benachbart anordbar. Dafür ist hier eine Sammelschiene 3 vorgesehen, an der die Erweiterungskomponenten 81, 82 befestigbar sind. Das Erweiterungselement 2 kann auch zum Aufschieben der Erweiterungskomponenten 81, 82, zum ihrem Aufschrauben und/oder einer anderen Befestigung ausgebildet sein. Das Erweiterungselement 2 dient zum Stützen der Eweiterungskomponenten 81, 82, insbesondere während ihrer Montage.

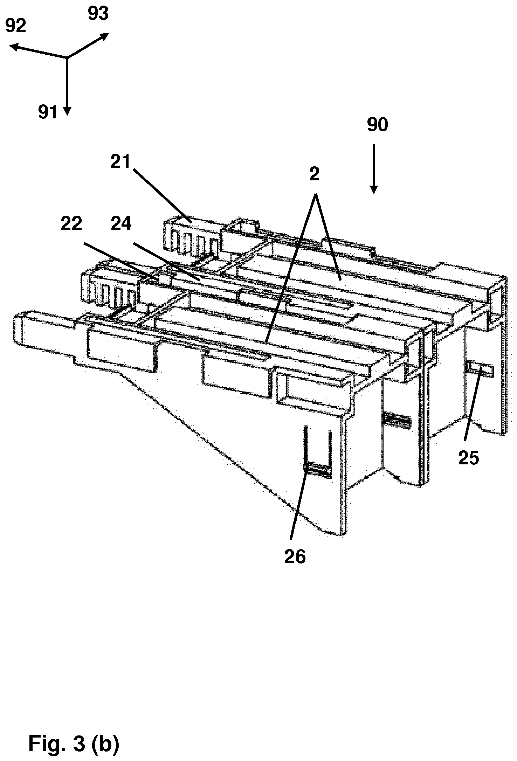

Die Fig. 3 (b) zeigt zwei nebeneinander angeordnete, aneinander befestigte Erweiterungselemente 2. Die Erweiterungselemente 2 weisen dafür jeweils an einer Seite Erweiterungszungen 24 auf. An der anderen Seite sind Erweiterungsnuten 22 vorgesehen, in die die Erweiterungszungen 24 des jeweils benachbarten Erweiterungselementes 2 eingreifen.

Um die Erweiterungselemente 2 aneinander zu fixieren, ist jeweils an der einen Seite das Schnappelement 26 und an der anderen Seite eine Kerbe 25 vorgesehen. Das Schnappelement 26 greift in die Kerbe 25 des benachbarten Erweiterungselementes 2 ein.

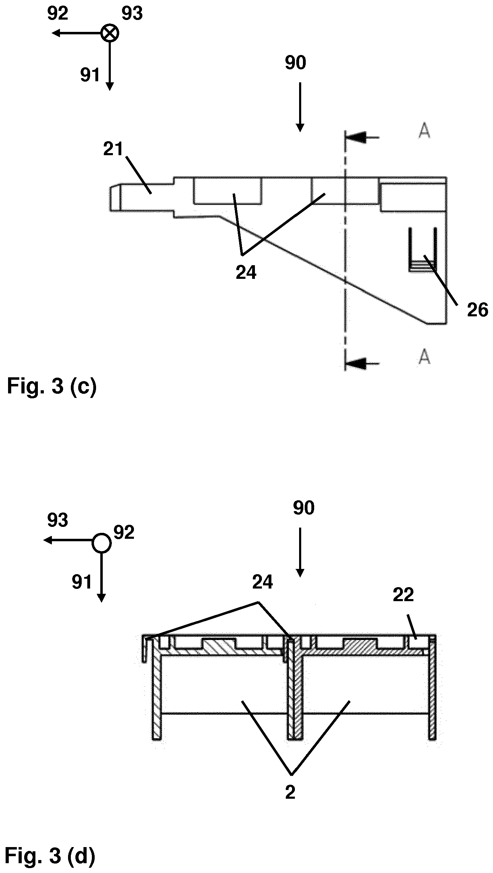

Dies ist in der Fig. 3 (c) in einer Seitenansicht und in der Fig. 3 (d) in einem Schnittbild A-A der Fig. 3 (c) gezeigt.

Fig. 4 zeigt eine am Anschlussadapter 1 anordbare elektrische Komponente 6. Dargestellt ist eine Rückwand 60 der elektrischen Komponente 6, mit der diese an der Stirnwand 161 des Anschlussadapters 1 anordbar ist.

Sichtbar sind die zu den Haltemitteln 17 des Anschlussadapters 1 korrespondierend ausgebildeten Gegenhaltemittel 62, in die die Haltemittel 17 einschiebbar sind. Weiterhin sind die Gegenanschlusssteckmitteln 61, in die die Anschlusssteckmittel 15 des Anschlussadapters 1 einsteckbar sind, dargestellt.

Zudem sind die Gegenführungskonturen 65 dargestellt, die beim Verschieben der elektrischen Komponente 6 in Schieberichtung 92 entlang den Führungsschienen 121 des Anschlussadapters 1 geführt werden.

Das Fixiermittel 19 des Anschlussadapters 1 untergreift in seiner Fixierposition F eine ebenfalls dargestellte Fixierkante 63 der elektrischen Komponente 6.

Zudem sind Befestigungsmittel 64 zum Befestigen der elektrischen Komponente 6 an einer Sammelschiene 3 dargestellt, mit denen die elektrische Komponente 6 an herkömmliche Adapter (nicht gezeigt) befestigbar ist.

Die Fig. 5 (a) und (b) zeigen jeweils eine Anordnung 100 aus dem am Einspeise- und/oder Signalbus 4 angeordneten Anschlussadapter 1 und der elektrischen Komponente 6 aus Fig. 4 in einer explosionsartigen Ansicht. Die Fig. 5 (a) und (b) zeigen zudem elektrische Erweiterungskomponenten 81, 82, mit denen die Anordnung erweiterbar ist, sowie Erweiterungselemente 2, die am Anschlussadapter 1 anordbar sind, und die zum Anordnen der 81, 82 Erweiterungskomponenten vorgesehen sind.

Die elektrische Komponente 6 ist hier ein Motorschutzschalter. Als Erweiterungskomponente ist in Fig. 5 (a) ein Starter 82 gezeigt, der mittels eines elektrischen Verbindungselementes 81 elektrisch an den Motorschutzschalter 6 anschließbar ist. Das Verbindungselement 81 und der Starter 82 sind dafür am Erweiterungselement 2 anordbar.

Die Anordnung aus dem Motorschutzschalter 6, dem Starter 82 und dem elektrischen Verbindungselement 81 ist als Direktstarter für einen Elektromotor (nicht gezeigt) nutzbar. Sie ermöglicht das Betreiben des Elektromotors in eine Drehrichtung.

Um den Elektromotor in beide Drehrichtungen betreiben zu können, werden zwei Starter 82 benötigt, die gemeinsam mit dem Motorschutzschalter 6 als Wendestarter betreibbar sind. Eine solche Anordnung zeigt Fig. 5 (b).

Um den zweiten Starter 82 an die Anordnung der Fig. 5 (a) anschließen zu können, wird das Erweiterungselement 2 durch ein zweites Erweiterungselement 2 erweitert, das in Erstreckungsrichtung 93 neben diesem angeordnet wird. Der zweite Starter 82 ist dann an dem zweiten Erweiterungselement 2 anordbar.

Der Anschlussadapter 1 sowie die Erweiterungselemente 2 sind aber auch für elektrische Komponenten 6 mit einer anderen Funktion, beispielsweise für Sensoren, Positionsschalter, Schütze, Frequenzumrichter, Netzfilter, Überspannungsschutzvorrichtungen oder Leuchtmelder, verwendbar.

### Bezugszeichenliste

- 1: Anschlussadapter
- 1': Anschlussadapter für herkömmliche el. Komponenten
- 10: Innenraum
- 11: Erstes Anschlussgehäuseteil
- 111: Führungsnut
- 112: Kopfaufnahme
- 113: Rastkante, Befestigungsmittel
- 114: Anzeigemittel
- 115: Einschub, Befestigungsmittel
- 12: Zweites Anschlussgehäuseteil
- 121: Führungsschiene
- 122: Sichtfenster
- 13: Umlenkstange
- 131, 132: Offenes Ende der Umlenkstange
- 133, 134: Kopfelement
- 135: Kopfaufnahme
- 14: Entriegler, Drücker
- 15: Anschlusssteckmittel, Push- In Kontakt
- 151: Längserstreckung
- 16: Geräteaufnahme
- 161: Stirnwand
- 162: Deckelwand
- 17: Haltemittel
- 171: Abstand
- 181: Erster Rastarm
- 1811, 1812: Offene Enden des ersten Rastarms
- 182: Zweiter Rastarm
- 1821, 1822: Offene Enden des zweiten Rastarms
- 183, 184: Raststeg

- 19: Fixiermittel, Schwenkarm
- 190: Schwenkachse
- 191: Schwenkrichtung
- 193: Rastkante
- 194: Betätigungsöffnung
- 195: Offenes Ende
- 2: Erweiterungselement
- 20: Verraststeg, Gegenmittel
- 21: Führungssteg, Gegenmittel
- 22: Erweiterungsnut
- 24: Erweiterungszunge
- 25: Kerbe
- 26: Schnappelement
- 3: Sammelschiene, Hutschiene
- 4: Einspeise- und/oder Signalbus
- 41: Montageleiste
- 42: Verbindungsleiste
- 421: Verbindungselement
- 43: Abschlusselement
- 44: Stromschiene, Flachleiter
- 45: Längsrippen
- 46: Querrippen
- 5: Einspeiseadapter
- 51: Schraubklemmen
- 6: Elektrische Komponente, Motorschutzschalter
- 61: Gegenanschlusssteckmittel, Buchse
- 62: Gegenhaltemittel
- 63: Fixierkante
- 64: Befestigungsmittel für die Sammelschiene
- 65: Gegenführungskontur
- 7: Wand
- 71: Erste Schwenkachse
- 711: Erste Schwenkrichtung
- 72: Zweite Schwenkachse
- 721: Zweite Schwenkrichtung
- 81, 82: Erweiterungskomponenten
- 90: Stirnseite, Vorderseite
- 91: Dritte Raumrichtung, Steckrichtung
- 92: Zweite Raumrichtung, Schieberichtung
- 93: Erste Raumrichtung, Erstreckungsrichtung
- 100: Anordnung
- F: Fixierposition

## Patentansprüche

1. Anschlussadapter (1), der zum elektrischen Verbinden einer elektrischen Komponente (6) mit einem außen geführten Einspeise- und/oder Signalbus (4) vorgesehen, und in eine Steckrichtung (91) auf den Einspeise- und/oder Signalbus (4) aufsteckbar ist, wobei der Anschlussadapter (1) aufweist:
- elektrische Anschlusssteckmittel (15) zum elektrischen Kontaktieren der elektrischen Komponente (6); und
- zumindest ein Fixiermittel (19) zum Fixieren der elektrischen Komponente (6), das von einer Fixierposition (F) ausgehend in eine Verstellposition und zurück verstellbar ist;
- wobei die Anschlusssteckmittel (15) gegen eine Schieberichtung (92) ausgerichtet sind, so dass die elektrischen Komponente (6) in Schieberichtung (92) auf die Anschlusssteckmittel (15) aufschiebbar ist;
- wobei das Fixiermittel (19) zum Fixieren der elektrischen Komponente (6) gegen ein Verschieben gegen die Schieberichtung (92) ausgebildet ist und das Fixiermittel (19) als ein Rasthaken ausgebildet ist;
**dadurch gekennzeichnet, dass**
- der Anschlussadapter (1) zu seinem Fixieren am Einspeise- und/oder Signalbus (4) zwei gegensätzlich zueinander schwenkbare Rastarme (181, 182) aufweist; und
- die Rastarme (181, 182) mittels einer Umlenkstange (13) miteinander verbunden sind, so dass sie gleichzeitig gegensätzlich betätigbar sind, insbesondere mittels eines manuell drückbaren Entrieglers (14).

2. Anschlussadapter (1) nach Anspruch 1, **dadurch gekennzeichnet, dass** das Fixiermittel (19) als aus einem elastischen Material hergestellter Schwenkarm ausgebildet ist, der gegen eine Rückstellkraft um eine Schwenkachse (190) in und gegen eine Schwenkrichtung (191) schwenkbar ist.

3. Anschlussadapter (1) nach einem der vorherigen Ansprüche, **dadurch gekennzeichnet, dass** er zum Anordnen der elektrischen Komponente (6) eine Geräteaufnahme (16) aufweist, die durch eine Stirnwand (161) und eine Deckelwand (162) begrenzt ist, wobei die elektrischen Anschlusssteckmittel (15) an der Deckelwand (162) angeordnet sind.

4. Anschlussadapter (1) nach einem der vorherigen Ansprüche, **dadurch gekennzeichnet, dass** die elektrischen Anschlusssteckmittel (15) von der Stirnwand (161) beabstandet sind und eine Längserstreckung (151) gegen die Schieberichtung (92) aufweisen.

5. Anschlussadapter (1) nach einem der vorherigen Ansprüche, **dadurch gekennzeichnet, dass** die elektrischen Anschlusssteckmittel (15) als Stecker oder als Federkraftklemmen, insbesondere als Push- In-Klemmen, ausgebildet sind.

6. Anschlussadapter (1) nach einem der vorherigen Ansprüche, **dadurch gekennzeichnet, dass** er zumindest ein Haltemittel (17) zum Fixieren der elektrischen Komponente (6) an der Stirnwand (161) aufweist.

7. Anschlussadapter (1) nach einem der vorherigen Ansprüche, **dadurch gekennzeichnet, dass** er ein Anzeigemittel (114) zum Anzeigen der Verrastung des Anschlussadapters (1) am Einspeise- und/oder Signalbus (4) aufweist.

8. Anschlussadapter (1) nach einem der vorherigen Ansprüche, **dadurch gekennzeichnet, dass** er Befestigungsmittel zum Befestigen (113, 115) eines Erweiterungselementes (2) aufweist, das in Schieberichtung (92) vor dem Anschlussadapter (1) an diesem anordbar ist.

9. Anschlussadapter (1) nach einem der vorherigen Ansprüche, der ein Erweiterungselement (2) mit Gegenmitteln (20, 21) zum Befestigen des Erweiterungselementes (2) am Anschlussadapter (1) aufweist, **dadurch gekennzeichnet, dass** mindestens eines der Gegenmittel (21) als eine Führungsschiene ausgebildet ist, um in eine Aufnahme (115) des Anschlussadapters (1) einzugreifen.

10. Anschlussadapter (1) nach Anspruch 9, **dadurch gekennzeichnet, dass** zumindest zwei Erweiterungselemente (2) in einer Erstreckungsrichtung (93) quer zur Schieberichtung (92) aneinander befestigbar sind.

11. Anordnung aus einer elektrischen Komponente (6) und einem Anschlussadapter (1) nach einem der vorherigen Ansprüche, der zum elektrischen Verbinden der elektrischen Komponente (6) mit einem außen geführten Einspeise- und/oder Signalbus (4) vorgesehen, und in die Steckrichtung (91) auf den Einspeise- und/oder Signalbus (4) aufsteckbar ist, **dadurch gekennzeichnet, dass** die elektrische Komponente (6) in die Schieberichtung (92) entlang dem Anschlussadapter (1) verschiebbar ist, wobei sie in einer Endposition mit dem Fixiermittel (19) des Anschlussadapters (1) mechanisch gegen ein Verschieben gegen die Schieberichtung (92) fixiert, und mit den elektrischen Anschlusssteckmitteln (15) des Anschlussadapters (1) elektrisch kontaktiert ist.

12. Verfahren zum Anordnen einer elektrischen Komponente (6) an einem Anschlussadapter (1) nach einem der Ansprüche 1 - 8, bei dem die elektrische Komponente (6) in die Schieberichtung (92) verschoben wird, wobei sie auf die elektrischen Anschlusssteckmittel (15) des Anschlussadapters (1) geschoben wird, bis eine Endposition erreicht ist, in der sie die elektrischen Anschlusssteckmittel (15) elektrisch kontaktiert, und in der das Fixiermittel (19) von der Verstellposition in die Fixierposition (F) schwenkt, und die elektrische Komponente (6) gegen eine Verschieben gegen die Verschieberichtung (92) sichert.

13. Verfahren nach Anspruch 12, **dadurch gekennzeichnet, dass** das Fixiermittel (19) zuvor beim Anlegen der elektrischen Komponente (6) an den Anschlussadapter (1) und/oder während des Verschiebens der elektrischen Komponente (6) in Schieberichtung (92) entlang dem Anschlussadapter (1) von der Fixierposition (F) in die Verstellposition verschwenkt wird.

## Claims

1. Connection adapter (1), which is provided for electrical connection of an electrical component (6) with an externally guided feed-in and/or signal bus (4) and is attachable to the feed-in and/or signal bus (4) in a plug-in direction (91), wherein the connection adapter (1) comprises:
- electrical plug-in connecting means (15) for electrical contacting of the electrical component (6); and
- at least one locating means (19) for locating the electrical component (6), which, starting from a locating position (F), is displaceable into a displaced position and back;
- wherein the plug-in connecting means (15) is orientated against a push direction (92), such that the electrical component (6) can be pushed onto the plug-in connecting means (15) in the push direction (92);
- wherein the locating means (19) for locating the electrical component (6) is formed against any pushing against the push direction (92) and the locating means (19) is formed as a locking hook;
**characterised in that**
- the connection adapter (1) has two locking arms (181, 182), swivelable opposite to each other, to locate it on the feed-in and/or signal bus (4); and
- the locking arms (181, 182) are connected together by means of a deflection bar (13), such that they can be actuated oppositely at the same time, in particular by means of an unlocking device (14) that can be pressed manually.

2. Connection adapter (1) according to claim 1, **characterised in that** the locating means (19) is formed as a swivel arm manufactured from an elastic material, which is swivelable against a restoring force about a swivel axis (190) in and contrary to a swivel direction (191).

3. Connection adapter (1) according to any one of the preceding claims, **characterised in that**, to arrange the electrical component (6), it has a device holder (16), which is limited by a front wall (161) and a cover wall (162), wherein the electrical plug-in connecting means (15) are arranged on the cover wall (162).

4. Connection adapter (1) according to any one of the preceding claims, **characterised in that** the electrical plug-in connecting means (15) are spaced apart from the front wall (161) and have a longitudinal extension (151) against the push direction (92).

5. Connection adapter (1) according to any one of the preceding claims, **characterised in that** the electrical plug-in connecting means (15) are formed as plugs or as spring-loaded terminals, in particular as push-in terminals.

6. Connection adapter (1) according to any one of the preceding claims, **characterised in that** it has at least one holding means (17) for locating the electrical component (6) on the front wall (161).

7. Connection adapter (1) according to any one of the preceding claims, **characterised in that** it has a display means (114) for displaying the locking of the connection adapter (1) on the feed-in and/or signal bus (4).

8. Connection adapter (1) according to any one of the preceding claims, **characterised in that** it has fastening means for fastening (113, 115) an extension element (2), which can be arranged in push direction (92) before the connection adapter (1) on said connection adapter.

9. Connection adapter (1) according to any one of the preceding claims, which has an extension element (2) with complementing means (20, 21) for fastening the extension element (2) on the connection adapter (1), **characterised in that** at least one of the complementing means (21) is formed as a guide rail, in order to engage into a holder (115) of the connection adapter (1).

10. Connection adapter (1) according to claim 9, **characterised in that** at least two extension elements (2) can be fastened together in an extension direction (93) across the push direction (92).

11. Arrangement comprising an electrical component (6) and a connection adapter (1) according to any one of the preceding claims, which is provided for electrical connection of the electrical component (6) with an externally guided feed-in and/or signal bus (4) and is attachable to the feed-in and/or signal bus (4) in a plug-in direction (91), **characterised in that** the electrical component (6) can be displaced in the push direction (92) along the connection adapter (1), wherein it is located mechanically in an end position with the locating means (19) of the connection adapter (1) against any displacement against the push direction (92), and is contacted electrically with the electrical plug-in connecting means (15) of the connection adapter (1).

12. Method for arranging an electrical component (6) on a connection adapter (1) according to any one of claims 1-8, in which the electrical component (6) is displaced in the push direction (92), wherein it is pushed onto the electrical plug-in connecting means (15) of the connection adapter (1), until an end position has been reached, in which it contacts the electrical plug-in connecting means (15) electrically, and in which the locating means (19) swivels from the displaced position into the locating position (F), and secures the electrical component (6) against displacement against the displacement direction (92).

13. Method according to claim 12, **characterised in that** the locating means (19) is swivelled beforehand during the placing of the electrical component (6) on the connection adapter (1) and/or during the displacing of the electrical component (6) in push direction (92) along the connection adapter (1) from the locating position (F) into the displaced position.

## Revendications

1. Adaptateur de raccordement (1), qui est prévu pour la connexion électrique d'un composant électrique (6) avec un bus d'alimentation et/ou de signal (4) guidé de manière externe, et qui peut être enfiché, dans une direction d'enfichage (91), dans le bus d'alimentation et/ou de signal (4), dans lequel l'adaptateur de raccordement (1) présente :
- des moyens de raccordement par fiches (15) électriques pour la mise en contact électrique du composant électrique (6) ; et
- au moins un moyen de fixation (19) pour la fixation du composant électrique (6), qui est ajustable dans une position d'ajustement en partant d'une position de fixation (F) et inversement ;
- dans lequel les moyens de raccordement par fiches (15) sont orientés à rencontre d'une direction de déplacement (92), de sorte que le composant électrique (6) puisse être déplacé, dans la direction de déplacement (92), sur les moyens de raccordement par fiches (15) ;
- dans lequel le moyen de fixation (19) pour la fixation du composant électrique (6) à rencontre d'un déplacement est réalisé à rencontre de la direction de déplacement (92) et le moyen de fixation (19) est réalisé en tant que crochet d'encliquetage ;
**caractérisé en ce que**
- l'adaptateur de raccordement (1) présente, pour sa fixation au bus d'alimentation et/ou de signal (4), deux bras d'encliquetage (181, 182) pouvant pivoter dans le sens contraire l'un par rapport à l'autre ; et
- les bras d'encliquetage (181, 182) sont reliés l'un à l'autre au moyen d'une tige de renvoi (13) de sorte qu'ils puissent être actionnés en sens contraire en même temps, en particulier au moyen d'un désenclencheur (14) sur lequel on peut appuyer manuellement.

2. Adaptateur de raccordement (1) selon la revendication 1, **caractérisé en ce que** le moyen de fixation (19) est réalisé en tant que bras pivotant fabriqué à partir d'un matériau élastique, qui peut pivoter à l'encontre d'une force de rappel autour d'un axe de pivotement (190) dans et à l'encontre d'une direction de pivotement (191).

3. Adaptateur de raccordement (1) selon l'une quelconque des revendications précédentes, **caractérisé en ce qu'**il présente, pour l'agencement du composant électrique (6), un logement d'appareil (16) qui est délimité par une paroi frontale (161) et une paroi supérieure (162), dans lequel les moyens de raccordement par fiches (15) électriques sont agencés au niveau de la paroi supérieure (162).

4. Adaptateur de raccordement (1) selon l'une quelconque des revendications précédentes, **caractérisé en ce que** les moyens de raccordement par fiches (15) électriques sont espacés de la paroi frontale (161) et présentent une direction longitudinale (151) à rencontre de la direction de déplacement (92).

5. Adaptateur de raccordement (1) selon l'une quelconque des revendications précédentes, **caractérisé en ce que** les moyens de raccordement par fiches (15) électriques sont réalisés en tant que fiches ou en tant que bornes à ressort, en particulier en tant que bornes de poussée et d'insertion.

6. Adaptateur de raccordement (1) selon l'une quelconque des revendications précédentes, **caractérisé en ce qu'**il présente au moins un moyen de retenue (17) pour la fixation du composant électrique (6) à la paroi frontale (161).

7. Adaptateur de raccordement (1) selon l'une quelconque des revendications précédentes, **caractérisé en ce qu'**il présente un moyen d'affichage (114) pour l'affichage de l'encliquetage de l'adaptateur de raccordement (1) au niveau du bus d'alimentation et/ou de signal (4).

8. Adaptateur de raccordement (1) selon l'une quelconque des revendications précédentes, **caractérisé en ce qu'**il présente des moyens de fixation pour la fixation (113, 115) d'un élément d'élargissement (2), qui peut être agencé, dans la direction de déplacement (92), devant l'adaptateur de raccordement (1) au niveau de celui-ci.

9. Adaptateur de raccordement (1) selon l'une quelconque des revendications précédentes, qui présente un élément d'élargissement (2) avec des moyens opposés (20, 21) pour la fixation de l'élément d'élargissement (2) à l'adaptateur de raccordement (1),
**caractérisé en ce qu'**au moins un des moyens opposés (21) est réalisé en tant que rail de guidage pour venir en prise avec un logement (115) de l'adaptateur de raccordement (1).

10. Adaptateur de raccordement (1) selon la revendication 9, **caractérisé en ce qu'**au moins deux éléments d'élargissement (2) peuvent être fixés l'un à l'autre dans une direction d'extension (93) transversalement à la direction de déplacement (92).

11. Agencement composé d'un composant électrique (6) et d'un adaptateur de raccordement (1) selon l'une quelconque des revendications précédentes, qui est prévu pour la connexion électrique du composant électrique (6) avec un bus d'alimentation et/ou de signal (4) guidé de manière externe et qui peut être enfiché, dans la direction d'enfichage (91), dans le bus d'alimentation et/ou de signal (4), **caractérisé en ce que** le composant électrique (6) peut être déplacé, dans la direction de déplacement (92), le long de l'adaptateur de raccordement (1), dans lequel il se fixe mécaniquement à l'encontre d'un déplacement à rencontre de la direction de déplacement (92) dans une position finale avec le moyen de fixation (19) de l'adaptateur de raccordement (1) et est mis en contact électrique avec les moyens de raccordement par fiches (15) électriques de l'adaptateur de raccordement (1).

12. Procédé pour l'agencement d'un composant électrique (6) au niveau d'un adaptateur de raccordement (1) selon l'une quelconque des revendications 1 à 8, dans lequel le composant électrique (6) est déplacé dans la direction de déplacement (92), dans lequel il est déplacé sur le moyen de raccordement par fiches (15) électriques de l'adaptateur de raccordement (1) jusqu'à ce qu'une position finale soit atteinte, dans laquelle il entre en contact électrique avec les moyens de raccordement par fiches (15) électriques, et dans laquelle le moyen de fixation (19) pivote de la position d'ajustement dans la position de fixation (F), et protège le composant électrique (6) contre un déplacement à l'encontre de la direction de déplacement (92).

13. Procédé selon la revendication 12, **caractérisé en ce que** le moyen de fixation (19) pivote au préalable lors de la pose du composant électrique (6) au niveau de l'adaptateur de raccordement (1) et/ou pendant le déplacement du composant électrique (6) dans la direction de déplacement (92) le long de l'adaptateur de raccordement (1) de la position de fixation (F) dans la position d'ajustement.
